# EUROPEAN PATENT APPLICATION

(11) **EP 4 757 062 A1**
(43) Date of publication of application: **10.06.2026**
(21) Application number: 25199874.6
(22) Date of filing: 03.09.2025
(51) Int. Cl.: H01M 50/595

(54) **SECONDARY BATTERY ELECTRODE PLATE, ELECTRODE ASSEMBLY INCLUDING THE SAME, AND METHOD OF MANUFACTURING THE ELECTRODE ASSEMBLY**

(30) Priority: 04.12.2024 KR 20240178610
(71) Applicant: Samsung SDI Co., Ltd., Yongin-si, Gyeonggi-do 17084 (KR)
(72) Inventor: KIM, Minhyung, 17084 Yongin-Si Gyeonggi-do (KR); KIM, Hyojeong, 17084 Yongin-Si Gyeonggi-do (KR)
(74) Representative: Gulde & Partner

(57) **Abstract**

An electrode assembly (100) includes a first electrode (110), a second electrode (120), a separator (250) between the first electrode (110) and the second electrode (120), a first electrode tab (210, 211, 233) connected to the first electrode (110), a second electrode tab (220, 221, 242) connected to the second electrode (120), and a transparent insulating layer (112, 117, 140, 140_1, 232) covering a boundary area between the first electrode tab (210, 211, 233) and a composite portion (113, 231, 241) of the first electrode (110), and covering a notched boundary line of the composite portion (113, 231, 241) of the first electrode (110) along a notched end of the composite portion (113, 231, 241) of the first electrode (110), wherein the composite portion (113, 231, 241) of the first electrode (110) includes an area having an active material.

## Description

### BACKGROUND

### 1. Field

Aspects of embodiments of the present disclosure relate to a secondary battery electrode plate, an electrode assembly including the electrode plate, and a method of manufacturing the electrode assembly.

### 2. Description Of The Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, laptop computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

When a secondary battery is exposed to abnormal conditions of a high temperature, such as an internal short, a separator interposed between a positive electrode and a negative electrode may shrink, causing a tab portion of the positive electrode, or aluminum of the tab portion, to come into direct contact with the negative electrode.

The above information disclosed in this Background section is for enhancement of understanding of the background of the present disclosure, and therefore, it may contain information that does not constitute related (or prior) art.

### SUMMARY

Coating the positive electrode with an insulating material may help to maintain an insulation between the positive electrode and the negative electrode. In this case, the insulating material, which may be a mixture of a ceramic and a binder, may be applied to an active material and a non-coated portion in an opaque color, such as a white color. However, when the positive electrode is coated with the insulating material, precision in a transverse direction (TD) may be low, and edge portions may not be smooth. Therefore, producing cells based on the coating of the insulating material may result in a poor cell alignment, errors in external dimensions, a reduced capacity, and/or the like. In addition, when there is a large error in the position and outer dimensions of a cell tab, a defect rate may increase during an assembly process.

Embodiments of the present disclosure may be directed to a secondary battery electrode plate, an electrode assembly including the electrode plate, and a method of manufacturing the electrode assembly, in which the electrode assembly may be improved.

However, aspects and features of the present disclosure are not limited to those described above, and other aspects and features not mentioned will be clearly understood by a person skilled in the art from the detailed description, described below.

According to one or more embodiments of the present disclosure, a secondary battery electrode plate, includes: a composite portion having an active material on at least one side of a substrate; a non-coated portion having no active material on the substrate; and a transparent insulating layer covering at least a portion of the composite portion and at least a portion of the non-coated portion.

In an embodiment, the transparent insulating layer may be located along a boundary area between the composite portion and the non-coated portion.

In an embodiment, the transparent insulating layer may include at least one of a transparent nano coating agent, a transparent nano insulating material, transparent alumina sol, Sb₂O₃, or SN₂.

In an embodiment, the transparent nano coating agent may include at least one of SiO₂, Silane, Al₂O₃, TiO₂, or ZnO.

In an embodiment, the composite portion may have a rounded end in a boundary area with the non-coated portion, and the transparent insulating layer may cover the rounded end of the composite portion.

In an embodiment, the transparent insulating layer may have a thickness of 0.1 mm or less, preferably 0.05 mm or less.

In an embodiment, a center line of the transparent insulating layer may overlap with a boundary line between the composite portion and the non-coated portion.

According to one or more embodiments of the present disclosure, an electrode assembly includes: a first electrode; a second electrode; a separator between the first electrode and the second electrode; a first electrode tab connected to the first electrode; a second electrode tab connected to the second electrode; and a transparent insulating layer covering a boundary area between the first electrode tab and a composite portion of the first electrode, and covering a notched boundary line of the composite portion of the first electrode along a notched end of the composite portion of the first electrode. The composite portion of the first electrode includes an area having an active material (e.g., an active material layer).

In an embodiment, the transparent insulating layer may include at least one of a transparent nano coating agent, a transparent nano insulating material, transparent alumina sol, Sb₂O₃, or SN₂.

In an embodiment, the transparent nano coating agent may include at least one of SiO₂, Silane, Al₂O₃, TiO₂, or ZnO.

In an embodiment, the composite portion of the first electrode may have a rounded end in the boundary area with the first electrode tab, and the transparent insulating layer may cover the rounded end of the composite portion.

In an embodiment, the transparent insulating layer may have a thickness of 0.1 mm or less, preferably 0.05 mm or less.

In an embodiment, a center line of the transparent insulating layer may overlap with a boundary line between the composite portion and the first electrode tab.

In an embodiment, a plurality of corners of the composite portion of the first electrode may be aligned with a plurality of corners of a composite portion of the second electrode in a stack of the first electrode and the second electrode.

In an embodiment, at least some of the plurality of corners of the composite portion of the first electrode may be visible through the transparent insulating layer.

According to one or more embodiments of the present disclosure, a method of manufacturing an electrode assembly includes: preparing first and second electrodes, each including: a composite portion having an active material (e.g., an active material layer) disposed on at least one surface of a substrate; and a non-coated portion having no active material disposed on the substrate; disposing a transparent insulating layer to cover at least a portion of the composite portion and the non-coated portion of the first electrode; and stacking the first electrode, the second electrode, and a separator interposed between the first electrode and the second electrode.

In an embodiment, the method may further include forming an electrode tab on the first electrode by notching the first electrode and/or the transparent insulating layer on the first electrode.

In an embodiment, the forming of the electrode tab on the first electrode may include cutting off a remaining area of the non-coated portion of the first electrode, the remaining area excluding the electrode tab and a portion of the composite portion and the transparent insulating layer of the first electrode along a line spaced from a boundary line between the composite portion and the non-coated portion of the first electrode toward the composite portion by a distance.

In an embodiment, the transparent insulating layer may cover a boundary area between the composite portion and the electrode tab of the first electrode.

In an embodiment, the disposing of the transparent insulating layer may include at least one of applying or spraying a material of the transparent insulating layer.

In an embodiment, the composite portion of the first electrode may have a plurality of corners; at least some of the plurality of corners of the composite portion of the first electrode may be visible through the transparent insulating layer; and the stacking of the first electrode, the second electrode, and the separator may include aligning and stacking the first electrode and the second electrode based on the plurality of corners visible through the transparent insulating layer.

In an embodiment, the transparent insulating layer may include at least one of a transparent nano coating agent, a transparent nano insulating material, transparent alumina sol, Sb₂O₃, or SN₂.

In an embodiment, the transparent nano coating agent may include at least one of SiO₂, Silane, Al₂O₃, TiO₂, or ZnO.

According to some embodiments of the present disclosure, a transparent insulating layer may be placed in a boundary area between a composite portion and a non-coated portion of a secondary battery electrode plate, and thus, the boundary area may be visible through the transparent insulating layer. Therefore, based on the visible boundary area between the composite portion and the non-coated portion, the secondary battery electrode plate may be notched or sequentially stacked, thereby increasing a precision in a process of manufacturing an electrode assembly, and lowering a defect rate therein.

According to some embodiments of the present disclosure, the transparent insulating layer may include at least one of a transparent nano coating agent, a transparent nano insulating material, transparent alumina sol, Sb₂O₃, or SN₂. Therefore, it may be possible to secure a stability of a secondary battery by preventing a tab portion of a positive electrode, or aluminum of the tab portion, from coming into direct contact with a negative electrode if (e.g., when) a separator interposed between the positive and negative electrodes shrinks, even if (e.g., when) the secondary battery is exposed to abnormal conditions of a high temperature, such as an internal short.

However, aspects and features of the present disclosure are not limited to those described above, and other aspects and features not mentioned will be clearly understood by a person skilled in the art from the detailed description, described below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a schematic view of a secondary battery according to some embodiments of the present disclosure.
FIG. 2 illustrates a cross-sectional view of the secondary battery according to some embodiments of the present disclosure.
FIG. 3 illustrates an example of a secondary battery electrode plate according to some embodiments of the present disclosure.
FIG. 4 illustrates a vertical cross-sectional view of a secondary battery electrode plate according to some embodiments of the present disclosure.
FIG. 5 illustrates a vertical cross-sectional view of a secondary battery electrode plate according to some embodiments of the present disclosure.
FIG. 6 illustrates an example of a first electrode along with a notching reference line according to some embodiments of the present disclosure.
FIG. 7 illustrates an example of a first electrode in three dimensions along with a notching reference line according to some embodiments of the present disclosure.
FIG. 8 illustrates an example of a reference point for stacking plates after notching a first electrode and a second electrode according to some embodiments of the present disclosure.
FIG. 9 illustrates a vertical cross-sectional view of an electrode assembly according to some embodiments of the present disclosure.
FIG. 10 illustrates a flowchart of an example of a method of manufacturing an electrode assembly according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

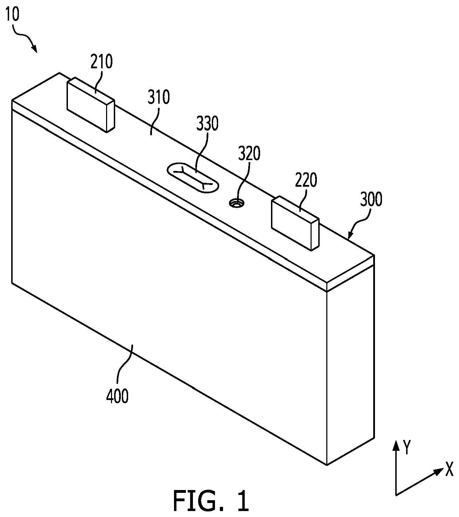

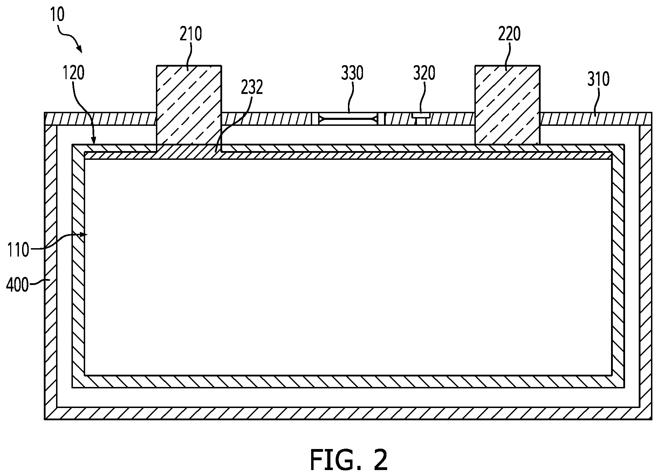

FIG. 1 is a schematic view of a secondary battery according to some embodiments of the present disclosure. FIG. 2 is a cross-sectional view of the secondary battery according to some embodiments of the present disclosure.

Referring to FIGS. 1 and 2, a secondary battery 10 may include a case 400, a cap assembly 300, a vent part 330, an electrolyte inlet 320, a cap plate 310, an electrode tab 210 and 220, a first electrode 110, a second electrode 120, and a transparent insulating layer 232. The first electrode 110, the second electrode 120, and the transparent insulating layer 232 may be placed inside (e.g., may be accommodated in) the case 400.

Referring to FIG. 1, the case 400 may have at least one side that is opened to accommodate an electrode assembly and an electrolyte, and may form the outer shape of the secondary battery. The case 400 may be for a square or pouch-shaped secondary battery, as illustrated in FIG. 1. However, the kind of secondary battery is not limited thereto, and, for example, the case 400 may be for a cylindrical secondary battery, a button-kind of secondary battery, and/or the like. The case may be formed of at least one of a metal, such as stainless steel (SUS), aluminum, an aluminum alloy, and/or nickel-plated steel, or a laminate film or a plastic forming a pouch. The cap assembly 300 or the cap plate 310 may be placed on the at least one open side of the case 400 to seal the case 400. The cap assembly 300 may include a gasket, an insulating layer, and/or the like, in addition to the cap plate 310, but the present disclosure is not limited thereto.

The electrolyte inlet 320 may be formed in the cap plate 310. An electrolyte may be injected into the case 400 through the electrolyte inlet 320. FIG. 1 shows the electrolyte inlet 320 formed in the cap plate 310, but the present disclosure is not limited thereto. For example, the electrolyte inlet 320 may be formed in the case 400. After the electrolyte is fully injected, the electrolyte inlet 320 may be sealed by a sealing tool, such as a plug.

The vent part 330 may be formed on the cap plate 310. Through the vent part 330, it may be possible to prevent or substantially prevent an explosion of the secondary battery 10, or a chain heating reaction of another secondary battery 10 arranged close to (e.g., adjacent to) the secondary battery 10. For example, the vent part 330 may be opened when a pressure in the secondary battery 10 exceeds a threshold pressure (e.g., a predetermined threshold pressure). The threshold pressure may be set differently depending on a field of application, a material, a purpose, and/or the like of the secondary battery 10.

FIG. 2 shows an example of a cross-section of the secondary battery 10 taken along a line across one side of the case 400 connected to the plurality of electrode tabs 210 and 220 of the secondary battery 10.

The first electrode 110 may be formed by disposing a first active material layer on at least a portion of a first substrate. The first electrode tab 210 may extend outward from a first non-coated portion of the first substrate where the first active material layer is not positioned, and may be electrically connected to the first electrode 110.

The second electrode 120 may be formed by disposing a second active material layer on at least a portion of a second substrate. The second electrode tab 220 may extend outward from a second non-coated portion of the second substrate where the second active material layer is not positioned, and may be electrically connected to the second electrode 120.

The first electrode tab 210 and the second electrode tab 220 may extend in the same direction as each other from the first electrode 110 and the second electrode 120, respectively, so that the first electrode tab 210 and the second electrode tab 220 may be formed on the same side of the electrode assembly. However, the present disclosure is not limited thereto, and the first electrode tab 210 of the first electrode 110 may be formed on one side of the electrode assembly, and the second electrode tab 220 of the second electrode 120 may be formed on another side (e.g., an opposite side) of the electrode assembly.

The first electrode 110 may serve as a positive electrode. In this case, the first substrate may be formed of a metal foil, such as aluminum and/or an aluminum alloy, and the first active material layer may include, for example, a transition metal oxide. The second electrode 120 may serve as a negative electrode. In this case, the second substrate may be formed of, for example, a copper foil or a nickel foil, and the second active material layer may include, for example, graphite or carbon.

A separator may be placed between the first electrode 110 and the second electrode 120. The separator may serve to prevent or substantially prevent a short circuiting between the first electrode 110 and the second electrode 120, while allowing a movement of lithium ions. The separator may be formed of, for example, a polyethylene film, a polypropylene film, a polyethylene-polypropylene film, and/or the like, but the present disclosure is not limited thereto.

The electrode assembly may be formed by alternately stacking or winding the first electrode 110, the second electrode 120, and the separator in the case 400. The electrode assembly may be a Z-stack electrode assembly formed by inserting a positive electrode plate and a negative electrode plate onto respective sides of a separator folded in a Z-stack. In addition, one or more electrode assemblies may be stacked with their long sides adjacent to each other, and may be accommodated inside the case, but the number of the electrode assemblies is not particularly limited.

The first electrode tab 210 may be placed on the left side of the electrode assembly, and the second electrode tab 220 may be disposed on the right side of the electrode assembly. As another example, the first electrode tab 210 and the second electrode tab 220 may be positioned on one side in the same direction as each other. The left and the right side correspond to those shown in FIG. 1, for convenience of illustration, but their positions may change when the secondary battery is rotated in left and right or up and down directions.

According to some embodiments, the transparent insulating layer 232 may be disposed between the first non-coated portion, which is an area without an active material, and a first composite portion, which is an area with an active material, within the first electrode 110. In other words, the transparent insulating layer 232 may be arranged along a boundary area between the first non-coated portion and the first composite portion. The transparent insulating layer 232 may be arranged to cover at least a portion of the first composite portion and at least a portion of the first non-coated portion.

According to some embodiments, the transparent insulating layer 232 may include an insulating material. The insulating material may include at least one of a transparent nano coating agent, a transparent nano insulating material, transparent alumina sol, Sb₂O₃, or SN₂, which may be materials that insulate against electricity and block the flow of a current. Accordingly, the transparent insulating layer 232 may prevent or substantially prevent an internal short circuit that may occur when the separator between the positive electrode and the negative electrode shrinks so that the tab portion of the positive electrode, or the aluminum of the tab portion, comes in direct contact with the negative electrode. In other words, the transparent insulating layer 232 may prevent the tab portion of the positive electrode, or the aluminum of the tab portion, from directly contacting the negative electrode, even if (e.g., when) the separator between the positive electrode and the negative electrode shrinks.

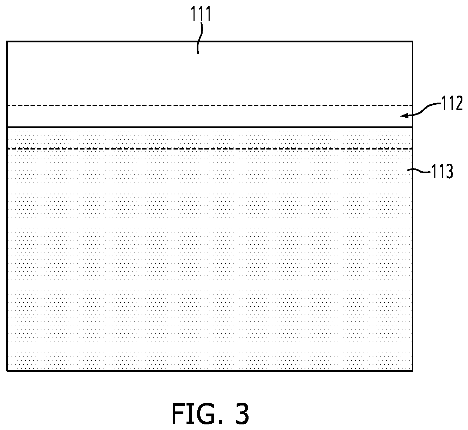

FIG. 3 shows an example of a secondary battery electrode plate according to some embodiments of the present disclosure.

Referring to FIG. 3, the secondary battery electrode plate may function as a positive electrode. A first composite portion 113 may include a first active material layer coated with an active material, and the first active material layer may include a transition metal oxide. A first non-coated portion 111 may include an area on a first substrate where no active material is arranged. A transparent insulating layer 112 may be arranged along a boundary area between the first composite portion 113 and the first non-coated portion 111, and may cover at least a portion of the first composite portion and at least a portion of the first non-coated portion. The transparent insulating layer 112 may include an insulating material. The insulating material may include at least one of a transparent nano coating agent, a transparent nano insulating material, transparent alumina sol, Sb₂O₃, or SN₂. For example, a transparent nano coating agent may include at least one of SiO₂, Silane, Al₂O₃, TiO₂, or ZnO. According to some embodiments, the transparent insulating layer 112 may be disposed at the boundary area between the first composite portion 113 and the first non-coated portion 111, so the boundary area may be visible.

The first composite portion 113 may be an area on the first substrate where the first active material layer is formed, and FIG. 3 shows the first composite portion 113 covering all areas on the first substrate except for the first non-coated portion 111. However, the present disclosure is not limited thereto, and the first active material layer may cover the remaining area except for the border area of the first substrate, for example.

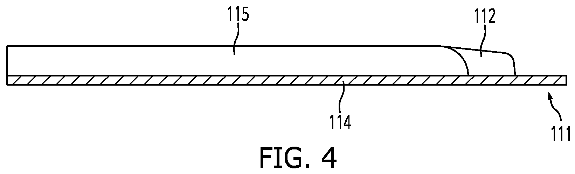

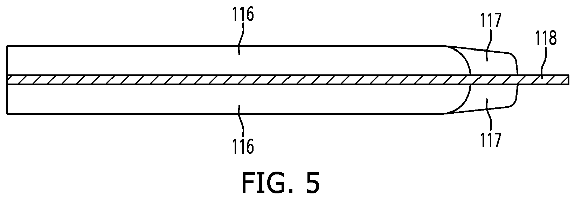

FIG. 4 illustrates a vertical cross-sectional view of a secondary battery electrode plate according to some embodiments of the present disclosure. FIG. 5 illustrates a vertical cross-sectional view of a secondary battery electrode plate according to some embodiments of the present disclosure. FIG. 4 shows one side of a first substrate of the secondary battery electrode plate functioning as a positive electrode that is coated with a first active material layer and a transparent insulating layer.

Referring to FIG. 4, the transparent insulating layer 112 and a first active material layer 115 may be placed on a first substrate 114. The first active material layer 115 may be the same or substantially the same as the first composite portion 113 described above with reference to FIG. 3.

According to some embodiments, the first active material layer 115 may have a rounded end at a boundary area with the first non-coated portion 111. The transparent insulating layer 112 may cover the rounded end of the first active material layer 115. The transparent insulating layer 112 may cover the rounded end of the first active material layer 115 and at least a portion of the first non-coated portion 111.

According to some embodiments, the transparent insulating layer 112 may be formed with a thickness of approximately 0.1 mm or less in the boundary area between the first active material layer 115 and the first non-coated portion 111. In addition, a center line of the transparent insulating layer 112 may overlap with a boundary line between the first active material layer 115 and the first non-coated portion 111.

Referring to FIG. 5, both sides (e.g., opposite sides) of a first substrate 118 may be coated with a first active material layer 116 and a transparent insulating layer 117. The transparent insulating layer 117 and the first active material layer 116 may be disposed on both sides (e.g., opposite sides) of the first substrate 118. Accordingly, a separator, a second electrode, and/or the like may be arranged on and under the secondary battery electrode plate.

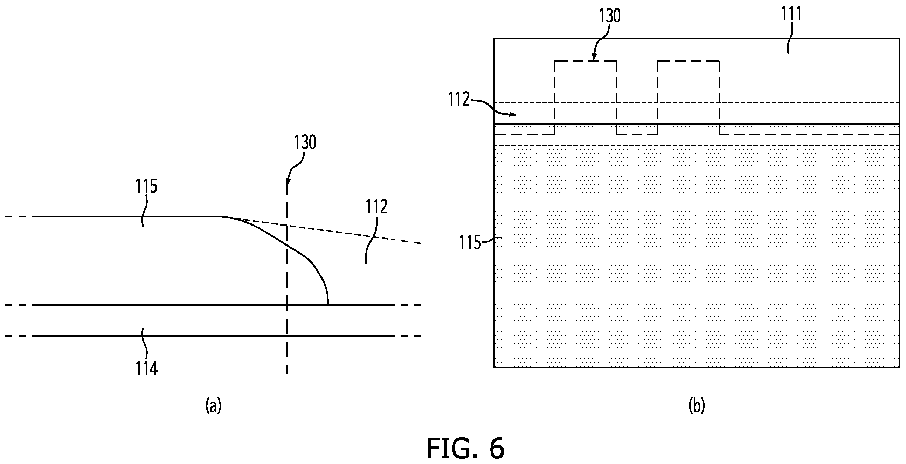

FIG. 6 illustrates an example of a first electrode along with a notching reference line 130 according to some embodiments of the present disclosure. In more detail, part (a) of FIG. 6 is a vertical cross-sectional view of the notching reference line 130 for forming an electrode tab of the secondary battery electrode plate described above with reference to FIG. 4 in a vertical direction (e.g., the Y direction), and part (b) of FIG. 6 is a top view of the notching reference line 130 for forming an electrode tab of the secondary battery electrode plate described above with reference to FIG. 3.

Referring to FIG. 6, the notching reference line 130 may be a virtual line for notching the first electrode on which the transparent insulating layer 112 is disposed, to form the electrode tab on the first electrode. The transparent insulating layer 112 and the first active material layer 115 may be disposed on the first substrate 114. An area where the first active material layer 115 is formed on the first substrate 114 may be referred to as a composite portion, and an area where the first active material layer 115 is not formed on the first substrate 114 may be referred to as a non-coated portion.

According to some embodiments, the transparent insulating layer 112 may include at least one of a transparent nano insulating material, transparent alumina sol, Sb₂O₃, or SN₂, which may be visible from the top of the first electrode. For example, a transparent nano coating agent may include at least one of SiO₂, Silane, Al₂O₃, TiO₂, or ZnO. Therefore, when the secondary battery electrode plate is viewed from the top in the vertical direction (e.g., the Y direction), the notching reference line 130 may be seen (e.g., may be viewed) through the transparent insulating layer 112. As a result, it may be possible to notch the secondary battery electrode plate based on a shoulder line, which may be a line spaced apart from a boundary line of the first active material layer 115 (e.g., a boundary line between the first active material layer 115 and the non-coated portion) toward the first active material layer 115 by a desired distance (e.g., a predetermined distance). By using the notching reference line 130 of the first electrode and the second electrode as a shoulder line of the composite portion, which may be visible through the transparent insulating layer 112, as described above, it may be possible to minimize or reduce problems that may occur during notching, such as a poor cell alignment, errors in external dimensions, and/or a reduced capacity.

Referring to parts (a) and (b) of FIG. 6, based on the notching reference line 130, a remaining area excluding the electrode tab in the non-coated portion of the first electrode may be cut off, and the notching reference line 130 may be spaced apart from the boundary line between the composite portion and the non-coated portion of the first electrode toward the composite portion by a desired distance (e.g.,. a predetermined distance), so that the composite portion of the first electrode and a portion of the transparent insulating layer may be cut off based on the notching reference line 130. With reference to part (b) of FIG. 6, the notching reference line 130 may cross the boundary area between the first active material layer 115 and the transparent insulating layer 112 in the vertical direction (e.g., the Y direction). Accordingly, at least one electrode tab may be created along the notching reference line 130. Although two electrode tabs are illustrated in part (b) of FIG. 6, the number of electrode tabs that may be formed is not limited thereto. One or more electrode tabs may be formed.

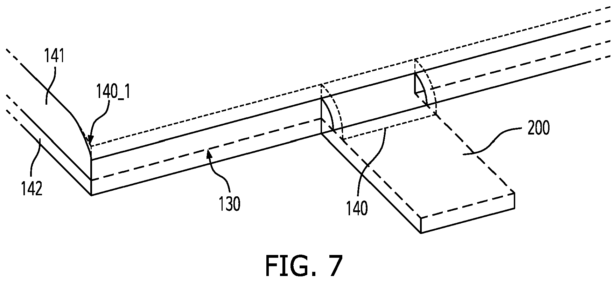

FIG. 7 illustrates an example of a first electrode in three dimensions along with the notching reference line 130 according to some embodiments of the present disclosure.

Referring to FIG. 7, as described above with reference to FIG. 6, a transparent insulating layer 140 and 140_1, a first active material layer 141, and a first substrate 142 may be cut off while notching is performed based on the notching reference line 130, except for a portion where an electrode tab 200 is to be formed.

In more detail, according to the embodiment illustrated in FIG. 6, the electrode tab 200 may be formed by cutting the first electrode, for example, such as the secondary battery electrode plate, based on the notching reference line 130. The electrode tab 200 may include a non-coated portion, which is a portion to which no active material is applied, the first active material layer 141, and the transparent insulating layer 140 on the first substrate 142. A rounded end of the first active material layer 141 on the electrode tab 200 may be placed in a boundary area between the electrode tab 200 and the first active material layer 141. The transparent insulating layer 140 may cover at least a portion of the first active material layer 141 on the electrode tab 200. The transparent insulating layer 140 may cover the rounded end of the first active material layer 141.

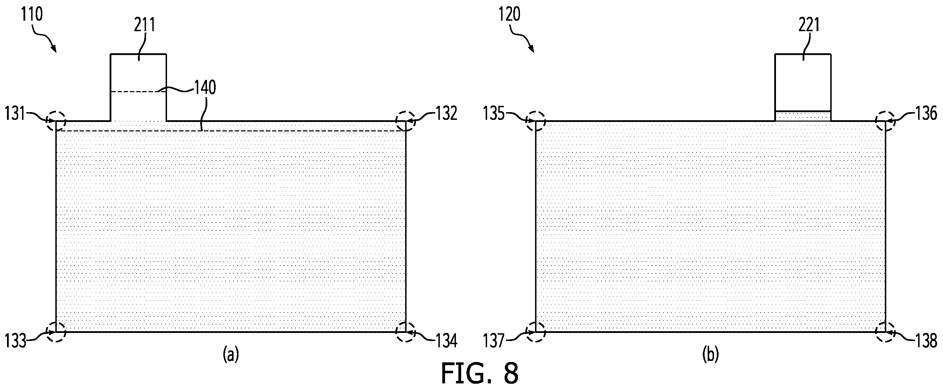

FIG. 8 illustrates an example of a reference point for stacking plates after notching the first electrode 110 and the second electrode 120 according to some embodiments of the present disclosure.

Referring to FIG. 8, the transparent insulating layer 140 may be the same or substantially the same as the transparent insulating layer 140 and 140_1 described above with reference to FIG. 7. A first electrode tab 211 may be the same or substantially the same as the electrode tab 200 described above with reference to FIG. 7. A first electrode 110 may include a first composite portion, the transparent insulating layer 140, and the first electrode tab 211, which have been notched. A second electrode 120 may include a second composite portion and a second electrode tab 221, which have been notched. Corners 131, 132, 133, and 134 of the first composite portion and corners 135, 136, 137, and 138 of the second composite portion may be virtual reference points for sequentially stacking the first electrode 110, a separator, and the second electrode 120. Hereinafter with reference to FIG. 8, the corners 131, 132, 133, and 134 of the first composite portion and the corners 135, 136, 137, and 138 of the second composite portion may be described in more detail, and redundant description as those above may not be repeated.

Referring to part (a) of FIG. 8, the first electrode tab 211 may protrude from the left side (e.g., the left-upper side) of the first electrode 110. However, the present disclosure is not limited thereto, and the first electrode tab 211 may protrude from the right side (e.g., the right-upper side) of the first electrode 110. The first electrode tab 211 may include at least a portion of the first composite portion, the transparent insulating layer 140, and a first non-coated portion.

Referring to part (b) of FIG. 8, the second electrode tab 221 may protrude from the right side (e.g., the right-upper side) of the second electrode 120. However, the present disclosure is not limited thereto, and the second electrode tab 221 may protrude from the left side (e.g., the left-upper side) of the second electrode 120. The second electrode tab 221 may include at least a portion of the second composite portion and a second non-coated portion.

According to some embodiments, the corners 131, 132, 133, and 134 of the first composite portion may be virtually set on the first composite portion. In addition, the corners 131 and 132 located close to (e.g., adjacent to) the first electrode tab 211 may be visible from the top in the vertical direction (e.g., the Y direction) through the transparent insulating layer 140. Accordingly, the first electrode 110, the separator, and the second electrode 120 may be sequentially stacked based on the corners 131, 132, 133, and 134 of the first composite portion and the corners 135, 136, 137, and 138 of the second composite portion. As a result, by using the visible corners of the composite portions as reference lines for stacking the first electrode 110 and the second electrode 120, an accuracy in a process of manufacturing the electrode assembly may be increased, while a defect rate may be lowered.

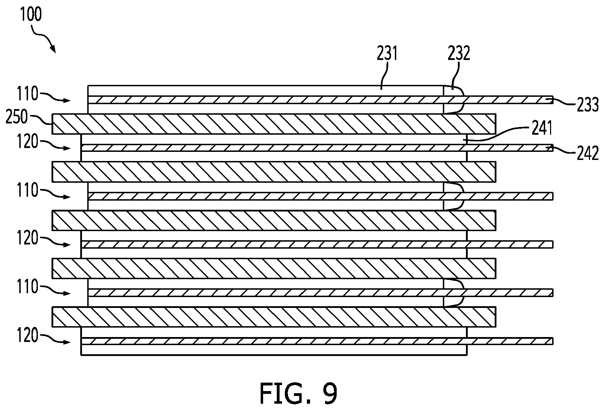

FIG. 9 illustrates a vertical cross-sectional view of an electrode assembly 100 according to some embodiments of the present disclosure.

Referring to FIG. 9, the electrode assembly 100 may include the first electrode 110, the second electrode 120, a separator 250 interposed between the first electrode 110 and the second electrode 120, a first electrode tab 233 connected to the first electrode 110, a second electrode tab 242 connected to the second electrode 120, and a transparent insulating layer 232 covering a boundary area between the first electrode tab 233 and a first composite portion 231 of the first electrode and one end of the first composite portion 231.

The first composite portion 231 may be an area on the first electrode 110 where an active material is arranged, and a second composite portion 241 may be an area on the second electrode 120 where an active material is arranged. The electrode assembly 100 may have a structure in which the first electrode 110, the separator 250, and the second electrode 120 are repeatedly stacked in the vertical direction (e.g., the Y direction). However, the present disclosure is not limited to the vertical cross-sectional view of the electrode assembly shown in FIG. 9, and the thickness of the electrode assembly or the number of electrodes and separators are not limited thereto.

According to some embodiments, the transparent insulating layer 232 and the first composite portion 231 may be formed on both sides (e.g., opposite sides) of a first substrate. Accordingly, the separator, the second electrode, and/or the like may be stacked on both the upper and lower surfaces of the first electrode 110. According to some embodiments, the transparent insulating layer 232 may include at least one of a transparent nano coating agent, a transparent nano insulating material, transparent alumina sol, Sb₂O₃, or SN₂. For example, the transparent nano coating agent may include at least one of SiO₂, Silane, Al₂O₃, TiO₂, or ZnO.

According to some embodiments, the first composite portion 231 of the first electrode 110 may have a rounded end at the boundary area with the first electrode tab 233, and the transparent insulating layer 232 may be arranged to cover the rounded end of the first composite portion 231. Although FIG. 9 shows the first composite portion 231 having an angled end, this is for convenience of illustration, and the present disclosure is not limited thereto.

According to some embodiments, a center line of the transparent insulating layer 232 may overlap with a boundary line between the first composite portion 231 and the first electrode tab 233.

According to some embodiments, at least some of a plurality of corners of the first composite portion 231 may be visible through the transparent insulating layer 232. Accordingly, as the first electrode 110 and the second electrode 120 are stacked, the plurality of corners of the first composite portion 231 may be aligned with a plurality of corners of the second composite portion 241. By using the visible corners of the composite portions as reference lines for stacking the first electrode 110 and the second electrode 120, an accuracy in a process of manufacturing the electrode assembly may be increased, while a defect rate may be lowered.

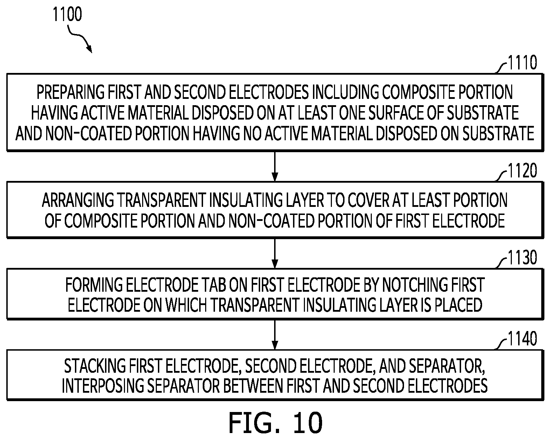

FIG. 10 illustrates a flowchart 1100 of an example of a method of manufacturing an electrode assembly according to some embodiments of the present disclosure. The method of manufacturing the electrode assembly may be performed by a suitable device for manufacturing the electrode assembly.

Referring to FIG. 10, in some embodiments, the method of manufacturing the electrode assembly may begin with preparing first and second electrodes including a composite portion having an active material disposed on at least one surface of a substrate and a non-coated portion having no active material disposed on the substrate (S1110).

A transparent insulating layer may be arranged to cover at least a portion of the composite portion and the non-coated portion of the first electrode (S1120). For example, the first electrode may be a positive electrode plate.

An electrode tab may be formed on the first electrode by notching the first electrode on which the transparent insulating layer is placed (S1130). For example, the electrode tab may be formed by cutting a portion of a first non-coated portion, the transparent insulating layer, and a first composite portion of the first electrode through a notching process at S1130.

The first electrode, the second electrode, and a separator may be stacked, interposing the separator between the first electrode and the second electrode (S1140).

According to some embodiments, the transparent insulating layer of the first electrode may be formed of a transparent insulating material. The transparent insulating layer may be arranged to cover at least a portion of the first composite portion and at least a portion of the first non-coated portion. The transparent insulating layer may be disposed along a boundary area between the first composite portion and the first non-coated portion. A center line of the transparent insulating layer may overlap with a boundary line between the first composite portion and the first non-coated portion. The transparent insulating layer may be arranged to cover a rounded end of the first composite portion. The transparent insulating layer may be formed to have a thickness of 0.1 mm or less. The boundary area between the first composite portion and the first non-coated portion may be visible through the transparent insulating layer from the top in a vertical direction (e.g., the Y direction) of the first electrode.

According to some embodiments, applying a transparent insulating material to the positive electrode substrate may include at least one of applying or spraying a material of the transparent insulating layer.

According to some embodiments, at least one of a transparent nano coating agent, a transparent nano insulating material, a transparent alumina sol, Sb₂O₃, or SN₂ may be included. For example, the transparent nano coating agent may include at least one of SiO₂, Silane, Al₂O₃, TiO₂, or ZnO.

According to some embodiments, the forming of the electrode tab on the first electrode may mean cutting off a remaining area of the first non-coated portion of the first electrode, excluding the electrode tab and a portion of the first composite portion and the transparent insulating layer of the first electrode based on a line spaced apart from the boundary line between the first composite portion and the first non-coated portion of the first electrode toward the first composite portion by a desired distance (e.g., a predetermined distance).

According to some embodiments, the line spaced apart from the boundary line by a desired distance (e.g., a predetermined distance) may be the same or substantially the same as the notching reference line 130 described above with reference to FIGS. 6 and 7.

According to some embodiments, at least some of a plurality of corners of the composite portion of the first electrode may be visible through the transparent insulating layer. Accordingly, as the first electrode and the second electrode are stacked, a plurality of corners of the first composite portion of the first electrode may be aligned with a plurality of corners of the composite portion of the second electrode. In other words, the stacking of the first electrode, the second electrode, and the separator may include aligning and stacking the first electrode and the second electrode based on the plurality of visible corners.

However, the present disclosure is not limited to the flowchart described above with reference to FIG. 10. For example, one or more operations in the flowchart of FIG. 10 may be added/changed/skipped, the order of one or more operations may be variously modified, and/or one or more operations may be performed concurrently (e.g., simultaneously or substantially simultaneously) with each other.

Although the present disclosure has been described with reference to embodiments and drawings illustrating aspects thereof, the present disclosure is not limited thereto. Various modifications and variations can be made by a person skilled in the art to which the present disclosure belongs within the technical scope of the present disclosure as defined by the appended claims.

## Claims

1. An electrode assembly (100) comprising:
a first electrode (110);
a second electrode (120);
a separator (250) between the first electrode (110) and the second electrode (120);
a first electrode tab (200, 210, 211, 233) connected to the first electrode (110);
a second electrode tab (220, 221, 242) connected to the second electrode (120); and
a transparent insulating layer (112, 117, 140, 140_1, 232) covering a boundary area between the first electrode tab (200, 210, 211, 233) and a composite portion (113, 231, 241) of the first electrode (110), and covering a notched boundary line of the composite portion (113, 231, 241) of the first electrode (110) along a notched end of the composite portion (113, 231, 241) of the first electrode (110),
wherein the composite portion (113, 231, 241) of the first electrode (110) comprises an area having an active material (115, 116, 141).

2. The electrode assembly (100) as claimed in claim 1, wherein the transparent insulating layer (112, 117, 140, 140_1, 232) comprises at least one of a transparent nano coating agent, a transparent nano insulating material, transparent alumina sol, Sb₂O₃, or SN₂.

3. The electrode assembly (100) as claimed in claim 2, wherein the transparent nano coating agent comprises at least one of SiO₂, Silane, Al₂O₃, TiO₂, or ZnO.

4. The electrode assembly (100) as claimed in any one of the preceding claims, wherein the composite portion (113, 231, 241) of the first electrode (110) has a rounded end in the boundary area with the first electrode tab (200, 210, 211, 233), and the transparent insulating layer (112, 117, 140, 140_1, 232) covers the rounded end of the composite portion (113, 231, 241).

5. The electrode assembly (100) as claimed in any one of the preceding claims, wherein the transparent insulating layer (112, 117, 140, 140_1, 232) has a thickness of 0.1 mm or less.

6. The electrode assembly (100) as claimed in any one of the preceding claims, wherein a center line of the transparent insulating layer (112, 117, 140, 140_1, 232) overlaps with a boundary line between the composite portion (113, 231, 241) and the first electrode tab (200, 210, 211, 233).

7. The electrode assembly (100) as claimed in any one of the preceding claims, wherein a plurality of corners (131, 132, 133, 134) of the composite portion (113, 231) of the first electrode (110) are aligned with a plurality of corners (135, 136, 137, 138) of a composite portion (241) of the second electrode (120) in a stack of the first electrode (110) and the second electrode (120).

8. The electrode assembly (100) as claimed in claim 7, wherein at least some of the plurality of corners (131, 132, 133, 134) of the composite portion (113, 231) of the first electrode (110) are visible through the transparent insulating layer (112, 117, 140, 140_1, 232).

9. A method of manufacturing an electrode assembly (100), comprising:
preparing first and second electrodes (110, 120), each comprising:
a composite portion (113, 231, 241) having an active material (115, 116, 141) disposed on at least one surface of a substrate (114, 118, 142); and
a non-coated portion (111) having no active material disposed on the substrate (114, 118, 142);
disposing a transparent insulating layer (112, 117, 140, 140_1, 232) to cover at least a portion of the composite portion (113, 231, 241) and the non-coated portion (111) of the first electrode (110); and
stacking the first electrode (110), the second electrode (120), and a separator (250) interposed between the first electrode (110) and the second electrode (120).

10. The method as claimed in claim 9, further comprising forming an electrode tab (200, 210, 211, 233) on the first electrode (110) by notching the first electrode (110) and/or the transparent insulating layer (112, 117, 140, 140_1, 232) on the first electrode (110).

11. The method as claimed in claim 10, wherein the forming of the electrode tab (200, 210, 211, 233) on the first electrode (110) comprises cutting off a remaining area of the non-coated portion (111) of the first electrode (110), the remaining area excluding the electrode tab (200, 210, 211) and a portion of the composite portion (113, 231, 241) and the transparent insulating layer (112, 117, 140, 140_1, 232) of the first electrode (110) along a line spaced from a boundary line between the composite portion (113, 231, 241) and the non-coated portion (111) of the first electrode (110) toward the composite portion (113, 231, 241) by a distance.

12. The method as claimed in claim 10 or 11, wherein the transparent insulating layer (112, 117, 140, 140_1, 232) covers a boundary area between the composite portion (113, 231, 241) and the electrode tab (200, 210, 211, 233) of the first electrode (110).

13. The method as claimed in any one of claims 9 to 12, wherein the disposing of the transparent insulating layer (112, 117, 140, 140_1, 232) comprises at least one of applying or spraying a material of the transparent insulating layer (112, 117, 140, 140_1, 232).

14. The method as claimed in any one of claims 9 to 13, wherein:
the composite portion (113, 231, 241) of the first electrode (110) has a plurality of corners (131, 132, 133, 134);
at least some of the plurality of corners (131, 132, 133, 134) of the composite portion (113, 231, 241) of the first electrode (110) are visible through the transparent insulating layer (112, 117, 140, 140_1, 232); and
the stacking of the first electrode (110), the second electrode (120), and the separator (250) comprises aligning and stacking the first electrode (110) and the second electrode (120) based on the plurality of corners (131, 132, 133, 134) visible through the transparent insulating layer (112, 117, 140, 140_1, 232).

15. The method as claimed in any one of claims 9 to 14, wherein the transparent insulating layer (112, 117, 140, 140_1, 232) comprises at least one of a transparent nano coating agent, a transparent nano insulating material, transparent alumina sol, Sb₂O₃, or SN₂.
